# FASCICULE DE BREVET EUROPEEN

(11) **EP 3 750 285 B1**
(45) Date de publication et mention de la délivrance du brevet: **16.11.2022**
(21) Numéro de dépôt: 19707436.2
(22) Date de dépôt: 31.01.2019
(51) Int. Cl.: H04L 45/50

(54) **PROCÉDÉ ET DISPOSITIF D'ENVOI DE PAQUETS DE DONNÉES SUR UN RÉSEAU IP/MPLS**
VERFAHREN UND VORRICHTUNG ZUM VERSENDEN VON DATENPAKETEN ÜBER EIN IP / MPLS-NETZWERK
METHOD AND DEVICE FOR SENDING DATA PACKETS OVER AN IP / MPLS NETWORK

(30) Priorité: 07.02.2018 FR 1851037; 14.02.2018 FR 1851251
(43) Date de publication de la demande: 16.12.2020
(73) Titulaire: Orange, 92130 Issy-les-Moulineaux (FR)
(72) Inventeur: DECRAENE, Bruno, 92326 CHÂTILLON CEDEX (FR)
(74) Mandataire: Vidon Brevets & Stratégie
(86) Numéro de dépôt international: PCT/FR2019/050221
(87) Numéro de publication internationale: WO 2019/155144

(56) Documents cités:
- WO-A1-2016/157133
- US-A1- 2015 030 020
- US-A1- 2015 200 843

## Description

### 1. Domaine de l'invention

L'invention concerne les réseaux de communication, et plus particulièrement les réseaux de paquets IP/MPLS (Internet Protocol/ MultiProtocol Label Switching en anglais).

### 2. Art Antérieur

Un réseau IP/MPLS est un réseau constitué de routeurs acheminant des paquets IP ou MPLS. Le mécanisme de transport de données mis en œuvre dans un tel réseau est basé sur la commutation d'étiquettes ou "labels" insérées dans les paquets à l'entrée du réseau MPLS et retirées des paquets à la sortie du réseau MPLS. Selon cette technologie, des chemins de transmission des paquets de données dans le réseau MPLS sont définis entre des routeurs du réseau MPLS, dit PE pour *Provider Edge* en anglais ou LER pour Label Edge Router en anglais. Des exemples se trouvent dans US 2015/030020 et US 2015/200843.

A l'entrée du réseau MPLS, notamment, un routeur d'entrée insère au moins une étiquette dans les paquets de données reçus permettant la transmission dudit paquet à travers le réseau MPLS selon le chemin associé à la ou aux étiquette(s). L'étiquette ou les étiquettes insérées dans le paquet sont déterminées à partir de tables de correspondance, associant une ou plusieurs étiquettes à une classe, connue sous le nom de FEC pour Forwarding Equivalence Class en anglais. Une même classe FEC est affectée à un groupe de paquets de données ayant au moins une caractéristique commune. Les paquets associés à une même classe FEC suivront alors le même chemin de transmission dans le réseau MPLS.

Le mécanisme de transport MPLS permet ainsi d'établir des tunnels, aussi connus sous le nom de LSP pour Label Switched Path en anglais. Différents types de tunnels peuvent être définis, par exemple:
- point à point, via le protocole RSVP-TE (pour Réservation Protocol Traffic Engineering en anglais),
- multipoint à point, via le protocole LDP pour Label Distribution Protocol en anglais ou le protocole "Segment Routing",
- point à multipoint, via le protocole RSVP-TE ou mLDP,
- multipoint à multipoint.

Un inconvénient de ces mécanismes est qu'il n'est pas possible pour un observateur placé sur le chemin d'un tunnel ou à l'extrémité sortante d'un tunnel, d'identifier la source d'un flux de données, ou d'identifier un flux de données ou encore un groupe de flux de données, ou un paquet ou un groupe de paquets transmis sur le chemin.

Une telle limitation est problématique, notamment pour le contrôle de la qualité du réseau, ou pour surveiller les performances du réseau par des mesures des pertes de paquets ou du délai de transmission par exemple, ou pour la mesure du trafic dans le réseau à des fins de statistique ou de dimensionnement, ou encore pour la mesure du trafic dans le réseau à des fins de facturation à l'usage, ou encore pour assurer une protection des flux transmis de bout en bout.

Une solution pour résoudre ce problème pourrait consister à insérer dans chaque paquet MPLS reçu 2 ou 3 étiquettes MPLS supplémentaires portant une identification du chemin et une identification de la source du flux. Une telle solution n'est toutefois pas optimale car elle nécessite la mise à jour des routeurs déjà en place dans les réseaux MPLS pour prendre en compte ces nouveaux champs. Or, de tels routeurs sont difficilement modifiables.

De plus, une telle solution nécessite l'utilisation d'une étiquette MPLS dite réservée, pour indiquer que les étiquettes suivantes correspondent à l'identification de la source et/ou du chemin. De telles étiquettes dites réservées sont en nombre limitées dans le standard MPLS, seulement 16 étiquettes réservées ont été définies pour tout le standard MPLS.

Une telle solution nécessite également de modifier toutes les entités destinataires des paquets reçus, ainsi qu'une signalisation supplémentaire dans le plan de contrôle afin qu'une entité destinataire annonce le support de ces nouveaux champs au routeur d'entrée du tunnel.

Une telle solution nécessite également d'ajouter des étiquettes MPLS supplémentaires sur les paquets, ce qui peut être difficile pour le routeur les ajoutant, et qui va également rendre plus difficile la lecture des entêtes placés derrière ces étiquettes, en particulier pour des besoins de partage de charge sur plusieurs chemins.

Il existe donc un besoin d'améliorer l'état de la technique.

### 3. Exposé de l'invention

L'invention concerne, à cet effet, un procédé d'envoi de paquets de données encapsulés selon le protocole MPLS, mis en œuvre par un dispositif d'envoi d'un réseau IP/MPLS. Le procédé d'envoi selon l'invention comprend:
- l'obtention d'un identifiant représentatif d'un groupe de paquets de données comprenant au moins un paquet de données,
- l'insertion dudit identifiant dans au moins une partie d'un champ de données associé à une étiquette d'entropie du protocole MPLS dudit au moins un paquet de données,
- l'envoi dudit au moins un paquet de données dans le réseau IP/MPLS.

Le procédé selon l'invention permet ainsi de réutiliser des champs d'étiquettes existantes du standard MPLS, évitant l'ajout de nouvelles étiquettes MPLS dans les paquets ou l'utilisation d'étiquettes réservées. L'invention permet ainsi de fournir une solution d'identification de la source ou du flux compatibles avec les routeurs déjà en place dans un réseau MPLS. En particulier, les fonctions du plan de transfert mises en œuvre par des composants "hardware" des routeurs de transit et de destination ne sont pas modifiées.

De plus, selon l'invention, l'utilisation d'une étiquette existante permet de ne pas augmenter la taille de la pile d'étiquettes des paquets transmis.

L'identifiant représentatif d'un groupe de paquets de données peut correspondre à un identifiant indiquant la source ayant émis les paquets du groupe de paquets de données, ou bien à un identifiant du groupe de paquets lui-même ou encore un identifiant comprenant une partie permettant d'identifier la source ayant émis le paquet et une partie permettant d'identifier le groupe de paquets lui-même. L'identifiant représentatif d'un groupe de paquets de données peut également correspondre à un identifiant de tranche de réseau ("network slice" en anglais) sur laquelle le groupe de paquets de données est transporté ou un identifiant complémentaire de qualité de service à appliquer aux paquets du groupe de paquets.

Le mécanisme d'entropie a été introduit dans les réseaux MPLS afin d'ajouter de l'entropie dans le réseau pour permettre de répartir la charge dans le réseau MPLS (i.e. permettre que des paquets de données affectés à une même classe puissent suivre des chemins différents dans le réseau), tout en s'assurant que l'ensemble des paquets d'un flux donné n'emprunte qu'un seul chemin (afin d'éviter le risque que les paquets n'arrivent dans un ordre différent). Pour cela, deux étiquettes spécifiques, appelées par la suite étiquettes d'entropie, sont insérées dans les paquets de données. Une première étiquette intitulée "Label ELI" selon le protocole MPLS dont le champ "Label" a une valeur bien connue et qui indique que l'étiquette suivante intitulée "Label EL" selon le protocole MPLS correspond au mécanisme d'entropie. La deuxième étiquette "Label EL" comprend dans un champ "Label" une valeur d'entropie.

Avantageusement, une telle étiquette d'entropie "Label EL" permet d'ajouter de l'entropie dans les paquets de données, tout en permettant de respecter la contrainte selon laquelle des paquets appartenant à un même flux de données sont transmis par un même chemin, i.e. la même succession de liens à travers le réseau, ceci afin d'éviter un ré-ordonnancement des paquets. Ainsi, pour les paquets d'un même flux de données, une même valeur d'entropie sera utilisée.

De par leur fonction, les étiquettes d'entropie ne sont pas utilisées pour l'aiguillage des paquets dans le réseau, on entend par là que les étiquettes d'entropie ne sont pas interprétées par les routeurs de la même manière que les étiquettes portant une information de type FEC.

Ainsi, la valeur d'entropie portée par une étiquette d'entropie peut être quelconque, dès lors que les paquets d'un même flux de données portent la même valeur d'entropie. Les champs d'une étiquette d'entropie peuvent ainsi être avantageusement utilisés pour porter un identifiant de la source ayant émis le paquet de données et/ou d'un groupe de paquets, sans modifier le fonctionnement de la solution d'entropie du protocole MPLS.

Par la suite, on appelle "étiquette", l'entête de 4 octets aussi connue sous le nom de "label" en anglais selon la norme RFC 6790 ou "label stack entry" en anglais selon la norme RFC 3032. Un tel entête de 4 octets ou étiquette comprend une valeur codée sur 20 bits, dans un champ de données également nommé "Label". Pour des raisons de clarté, une telle valeur d'étiquette codée sur 20 bits sera appelée par la suite champ de données "Label" ou champ "Label" de l'étiquette.

Selon un mode particulier de réalisation de l'invention, ledit champ de données est compris dans la liste comprenant:
- un champ de données "Label" de l'étiquette d'entropie "Label EL",
- un champ de données "TC" de l'étiquette d'entropie "Label EL",
- un champ de données "TTL" de l'étiquette d'entropie "Label EL",
- un champ de données "TC" de l'étiquette d'entropie "Label ELI",
- un champ de données "TTL" de l'étiquette d'entropie "Label ELI".

Avantageusement, un champ ou plus de l'étiquette d'entropie MPLS "Label EL" et/ou de l'étiquette d'entropie MPLS "Label ELI" est utilisé pour porter l'identifiant de la source et/ou du groupe de paquets. De tels champs ne sont pas utilisés pour l'aiguillage des paquets, ils peuvent donc être utilisés en tout ou partie pour les besoins de l'invention, sans impact sur le fonctionnement de la solution d'entropie du standard MPLS.

Selon un mode particulier de réalisation de l'invention, lorsqu'un flux comprend au moins deux groupes de paquets de données, une première partie dudit identifiant est insérée dans le champ de données "Label" de l'étiquette d'entropie "Label EL" de chacun des paquets de données des deux groupes, et une deuxième partie dudit identifiant est insérée dans un autre champ de l'étiquette d'entropie "Label EL" ou "Label ELI" de chacun des paquets de données des deux groupes, ladite deuxième partie étant identique pour tous les paquets d'un même groupe de paquets du flux, et distincte pour des paquets de données n'appartenant pas à un même groupe de paquets du flux.

Selon ce mode particulier de réalisation de l'invention, il est ainsi possible d'identifier des groupes de paquets d'un même flux en insérant un identifiant distinct pour chaque groupe de paquets, tout en respectant la contrainte du mécanisme d'entropie selon laquelle les paquets d'un même flux suivent le même chemin. En effet, la première partie de l'identifiant insérée dans le champ de données "Label" de l'étiquette d'entropie "Label EL" est identique pour tous les paquets de données quel que soit le groupe de paquets auquel ils appartiennent.

Selon un autre mode particulier de réalisation de l'invention, ledit identifiant est un identifiant de tranche de réseau (aussi connu sous le nom "network slice" en anglais) via laquelle ledit groupe de paquets est transportée. Selon ce mode particulier de réalisation de l'invention, ledit identifiant de tranche de réseau est configuré sur le dispositif d'envoi ou reçu par le dispositif d'envoi. Avantageusement, un tel identifiant de tranche de réseau inséré dans un paquet permet ainsi au dispositif de lecture recevant le paquet d'identifier la tranche de réseau via laquelle le paquet reçu est transporté et ainsi appliquer sur le paquet les traitements spécifiques à cette tranche de réseau.

Selon un autre mode particulier de réalisation de l'invention, ledit identifiant est un identifiant de qualité de service à appliquer aux paquets dudit groupe de paquets. Selon ce mode particulier de réalisation de l'invention, l' identifiant est configuré sur le dispositif d'envoi ou reçu par le dispositif d'envoi. Avantageusement, un tel identifiant de qualité de service inséré dans un paquet permet ainsi au dispositif de lecture recevant le paquet d'identifier la qualité de service à appliquer au paquet reçu et ainsi placer le paquet dans la bonne file d'attente et/ou appliquer les bonnes politiques de mise en file d'attente et/ou de sortie de file d'attente.

Selon un autre mode particulier de réalisation de l'invention, ledit identifiant est un identifiant de flux auquel ledit groupe de paquets appartient et ledit identifiant est reçu par le dispositif d'envoi.

Selon ce mode particulier de réalisation de l'invention, l'identifiant de flux est déterminé de manière centralisée et transmis au dispositif d'envoi pour insertion dans les paquets de données. Par exemple, le dispositif d'envoi reçoit l'identifiant en provenance d'un serveur selon le protocole NETCONF/YANG, ou via le protocole PCEP (pour Path Computation Element Communication Protocol en anglais).

Selon un autre mode particulier de réalisation de l'invention, l'obtention d'un identifiant comprend:
- l'obtention d'un identifiant dudit dispositif d'envoi,
- la détermination par le dispositif d'envoi d'un identifiant de flux auquel appartient le groupe de paquets,
- la concaténation dudit identifiant du dispositif d'envoi et dudit identifiant de flux pour former l'identifiant à insérer dans ledit au moins un paquet.

Selon ce mode particulier de réalisation de l'invention, l'identifiant de flux est déterminé localement par le dispositif d'envoi. Ainsi, il n'est pas nécessaire de gérer un serveur central allouant des identifiants de flux.

L'invention concerne également un dispositif de paquets de données transmis sur un réseau IP/MPLS, configuré pour:
- obtenir un identifiant représentatif d'un groupe de paquets de données comprenant au moins un paquet de données,
- insérer ledit identifiant dans au moins une partie d'un champ de données associé à une étiquette d'entropie du protocole MPLS dudit au moins un paquet de données,
- envoyer ledit au moins un paquet de données dans le réseau IP/MPLS.

L'invention concerne aussi un procédé de lecture d'un identifiant représentatif d'un groupe de paquets de données transmis sur un réseau IP/MPLS, comprenant:
- la réception d'au moins une partie d'un paquet de données appartenant audit groupe de paquets de données,
- l'obtention dudit identifiant depuis au moins une partie d'un champ de données associé à une étiquette d'entropie MPLS présente dans ledit paquet de données.

Un tel procédé permet de lire l'identifiant de groupe de paquets insérés par un dispositif d'envoi du réseau IP/MPLS. Le procédé de lecture peut avantageusement être mis en œuvre par un routeur de sortie du réseau IP/MPLS, ou un routeur de transit du réseau IP/MPLS, ou encore un serveur applicatif quelconque en charge d'identifier les groupes de paquets transmis sur le réseau IP/MPLS pour différents usages.

Corrélativement, l'invention concerne également un dispositif de lecture d'un identifiant représentatif d'un groupe de paquets de données transmis sur un réseau IP/MPLS, configuré pour:
- recevoir au moins une partie d'un paquet de données appartenant audit groupe de paquets de données,
- obtenir ledit identifiant depuis au moins une partie d'un champ de données associé à une étiquette d'entropie MPLS présente dans ledit paquet de données.

Selon un mode particulier de réalisation de l'invention, un tel dispositif de lecture est compris dans un routeur de transit d'un réseau IP/MPLS ou un routeur de sortie d'un réseau IP/MPLS.

L'invention concerne également un programme d'ordinateur comportant des instructions pour la mise en œuvre des procédés ci-dessus selon l'un quelconque des modes particuliers de réalisation décrits précédemment, lorsque ledit programme est exécuté par un processeur. Les procédés peuvent être mis en œuvre de diverses manières, notamment sous forme câblée ou sous forme logicielle.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique. Un tel moyen de stockage peut par exemple être un disque dur, une mémoire flash, etc.... D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet. Alternativement, les supports d'enregistrement peuvent correspondre à un circuit intégré dans lequel le programme est incorporé, le circuit étant adapté pour exécuter ou pour être utilisé dans l'exécution du procédé en question.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
- la figure 1 illustre un exemple d'un réseau ou d'une partie de réseau IP/MPLS dans lequel l'invention peut être mise en œuvre,
- la figure 2 illustre des étapes du procédé d'envoi d'un groupe de paquets de données MPLS selon un mode particulier de réalisation de l'invention,
- la figure 3 illustre des étapes pour obtenir un identifiant représentatif d'une source et d'un flux transmis par la source selon un mode particulier de réalisation de l'invention,
- la figure 4 illustre des étapes du procédé de lecture d'un identifiant représentatif d'un groupe de paquets de données MPLS selon un mode particulier de réalisation de l'invention,
- la figure 5 illustre un dispositif configuré pour mettre en œuvre le procédé d'envoi d'un groupe de paquets de données MPLS selon un mode particulier de réalisation de l'invention,
- la figure 6 illustre un dispositif configuré pour mettre en œuvre le procédé de lecture d'un identifiant représentatif d'un groupe de paquets de données MPLS selon un mode particulier de réalisation de l'invention.

### 5. Description d'un mode de réalisation de l'invention

### 5.1 Principe général de l'invention

Le principe général de l'invention consiste à réutiliser un entête MPLS d'une étiquette d'entropie insérée dans un paquet de données, connue sous le nom "Entropy Label", déjà définie dans le standard MPLS, afin de transporter un identifiant représentatif d'un groupe de paquets auquel ledit paquet appartient,sur un réseau MPLS. Un tel identifiant peut identifier une source et/ou un flux et/ou un groupe de paquets et/ou une qualité de service et/ou une tranche de réseau.

Avantageusement, l'invention permet de résoudre le problème d'identification des groupes de paquets de données transitant dans le réseau IP/MPLS sans nécessiter de modifications lourdes des mécanismes MPLS existants. L'utilisation d'étiquettes d'entropie permet à la fois de transporter un identifiant de source, de flux, ou de groupes de paquets d'un flux, tout en conservant le fonctionnement du mécanisme d'entropie défini par le standard MPLS et utilisé pour la répartition de la charge dans le réseau MPLS.

### 5.2 Modes particuliers de réalisation de l'invention.

Pour rappel, le mécanisme d'entropie défini dans le document RFC6790 ("The use of Entropy Labels in MPLS Forwarding", IETF, Novembre 2012) consiste à ajouter deux étiquettes spécifiques dans un paquet de données transporté par un réseau MPLS. Ces deux étiquettes sont insérées juste après l'étiquette indiquant la destination du tunnel (LSP). La table 1 ci-dessous illustre ces deux étiquettes.

Une première étiquette appelée ELI pour Entropy Label Indicator en anglais est une étiquette MPLS réservée. Elle est utilisée pour indiquer que l'étiquette suivante est une étiquette codant l'entropie. Cette première étiquette n'est donc pas utilisée pour l'acheminement du paquet.

La deuxième étiquette appelée EL pour Entropy Label en anglais est une étiquette portant une valeur d'entropie. La valeur codée dans cette étiquette est une valeur quelconque, endehors des valeurs 0-15 qui sont réservées, mais elle doit être constante pour un flux donné. Une telle valeur sert à ajouter de l'entropie afin de mieux répartir les différents flux lors du partage de charge sur plusieurs chemins.

**Table 1: Etiquettes d'entropie insérées dans un entête MPLS**

| | | | | | | | |
|---|---|---|---|---|---|---|---|
| 0 | | 1 | | 2 | | 3 | |
| 0 1 2 3 4 5 6 7 8 9 0 1 2 3 4 5 6 7 8 9 0 1 2 3 4 5 6 7 8 9 0 1 | | | | | | | |
| +-+-+-+-+-+-+-+-+-+-+-+-+-+-+-+-+-+-+-+-+-+-+-+-+-+-+-+-+-+-+-+-+ | | | | | | | (Label ELI) |
| \| | | Label | | \| TC \|S\| | | TTL \| | |
| +-+-+-+-+-+-+-+-+-+-+-+-+-+-+-+-+-+-+-+-+-+-+-+-+-+-+-+-+-+-+-+-+ | | | | | | | |
| +-+-+-+-+-+-+-+-+-+-+-+-+-+-+-+-+-+-+-+-+-+-+-+-+-+-+-+-+-+-+-+-+ | | | | | | | (Label EL) |
| \| | | Label | | \| TC \|S\| | | TTL \| | |
| +-+-+-+-+-+-+-+-+-+-+-+-+-+-+-+-+-+-+-+-+-+-+-+-+-+-+-+-+-+-+-+-+ | | | | | | | |

Comme illustré par la table 1 ci-dessus, chaque étiquette d'entropie ELI et EL comprend 4 champs: un champ "Label" codant sur 20 bits, un champ TC codé sur 3 bits, un champ "S" codé sur 1 bit et un champ TTL codé sur 8 bits.

Certains champs de cet entête définis pour le mécanisme d'entropie sont sous-utilisés.

Par exemple, le champ "Label" de l'étiquette EL (EL.label) est destiné à porter une valeur d'entropie permettant de distinguer plusieurs flux vers une même destination, pour des raisons de répartition de charge. Un tel champ est globalement surdimensionné pour porter une valeur d'entropie. En effet, en pratique, les 20 bits de ce champ "Label" ne sont pas tous utilisés pour porter une valeur d'entropie. Ainsi, plusieurs bits (e.g. 10) de champ "Label" peuvent être utilisés pour identifier un flux ou un groupe de flux ou la source émettant ces flux ou une tranche de réseau ou une information complémentaire de qualité de service. Avantageusement, les bits de ce champ qui seraient utilisés pour porter un identifiant de flux ou de source peuvent également être utilisés en même temps pour le partage de charge. En effet, la seule contrainte pour la valeur portée par ce champ est que la valeur portée ne doit pas changer pour un flux donné.

Le champ TC de l'étiquette d'entropie EL (EL.TC) sert habituellement à indiquer la classe de trafic du paquet de données. Or, l'étiquette d'entropie MPLS EL n'est jamais utilisée pour le transfert (forwarding en anglais) des paquets, donc pour déterminer la classe de transfert. Ce champ peut donc être utilisé pour transporter un identifiant de flux, de groupe de flux ou de source ou une tranche de réseau ou une information complémentaire de qualité de service.

Le champ TTL de l'étiquette EL (EL.TTL) sert habituellement à limiter le nombre de routeurs traversés dans le réseau. Or, l'étiquette d'entropie MPLS EL n'est jamais utilisée pour le transfert (forwarding) des paquets. Cependant, le mécanisme d'entropie défini dans le document RFC6790 spécifie que le champ EL.TTL doit être mis à zéro pour être sûr que cette étiquette ne soit jamais utilisée pour le transfert. Bien qu'une protection supplémentaire contre d'éventuels bugs soit toujours bienvenue quand son coût est nul, une telle mesure ne parait pas nécessaire. Une telle contrainte est également spécifiée pour d'autres types d'étiquettes qui ne devraient pas non plus être utilisées hors de leur cadre d'utilisation, mais en pratique cette contrainte est rarement respectée. Le champ EL.TTL peut donc être raisonnablement utilisé pour porter un identifiant ou une partie d'identifiant de flux, de groupe de flux ou de source ou une tranche de réseau ou une information complémentaire de qualité de service.

Le champ TTL de l'étiquette ELI (ELI.TTL) sert habituellement à limiter le nombre de routeurs traversés dans le réseau. Or, ce champ n'est consulté que par le routeur de terminaison du LSP et potentiellement le routeur précédent. Pour plus de sûreté, ce champ ne peut donc pas être mis à 0 ou 1. Pour se prémunir d'une possible décrémentation, le bit de poids faible ne sera pas utilisé et sera positionné à 1. Il est à noter que le mécanisme d'entropie défini dans le document RFC6790 recommande de mettre une valeur de TTL habituelle. Mais, une telle valeur n'a pas vraiment d'intérêt et il reste autorisé de mettre une valeur quelconque.

Le champ TC de l'étiquette ELI (ELI.TC) sert habituellement à indiquer la classe de trafic. Dans le cas où le réseau utilise le mécanisme de Penultimate Hop Popping (PHP), ce champ ne peut pas être réutilisé. Si le réseau n'utilise pas le mécanisme PHP, ce champ peut être réutilisé pour porter un identifiant ou une partie d'identifiant de flux, de groupe de flux ou de source.

Ainsi, un identifiant de source, de flux ou de groupe de flux, de paquet ou de groupes de paquets, de tranche de réseau ou une information complémentaire de qualité de service peut être codé sur au moins une partie de champs d'une étiquette d'entropie EL ou ELI.

Lorsque le mécanisme PHP est utilisé dans le réseau, le nombre de bits disponibles pour encoder un identifiant de source, de flux ou de groupe de flux est d'environ 21 bits, pris par exemple parmi les champs suivants: 10 bits du champ EL.label, 3 bits du champ EL.TC, 8 bits du champ EL.TTL et 7 bits du champ ELI.TTL. Le nombre de bit indiqué ici est un simple exemple illustratif, d'autres valeurs de nombre de bits pris sur les champs précités sont bien entendu possibles. Par exemple, 8 ou 12 bits peuvent être pris sur le champ EL.Label. Lorsque le mécanisme PHP n'est pas utilisé dans le réseau, le nombre de bits disponibles pour encoder un identifiant de source, de flux ou de groupe de flux est d'environ 30 bits, pris par exemple parmi les champs suivants: 10 bits du champ EL.label, 3 bits du champ EL.TC, 8 bits du champ EL.TTL, 8 bits du champ ELI.TTL et 8 bits du champ ELI.TC. Le nombre de bit indiqué ici est un simple exemple illustratif, d'autres valeurs de nombre de bits pris sur les champs précités sont bien entendu possibles. Par exemple, 8 ou 12 bits peuvent être pris sur le champ EL.Label.

21 bits permettent d'encoder 2²¹=2 087 152 valeurs distinctes. L'identification du nombre de routeurs sources dans un réseau MPLS nécessite une valeur par routeur source. Considérant un réseau de 5000 routeurs MPLS, ce qui est déjà un très grand réseau, 5000 valeurs sont donc nécessaires, soit 12 bits (4096 sources) ou 13 bits (8192 sources). Il reste alors 9 ou 8 bits par routeur source pour identifier des flux, soit 512 ou 256 flux.

Dans le cas d'une allocation centralisée des flux, l'ensemble des 21 bits peut être utilisé pour l'identification des flux, ce qui permet d'identifier 2 millions de flux différents.

De plus, dans le cas où le mécanisme PHP n'est pas utilisé, 9 bits supplémentaires sont disponibles, ce qui est considérable (30 bits permettent d'encoder 1 073 741 824 valeurs différentes, soit plus d'un milliard).

Il apparaît donc que les champs des étiquettes d'entropie sont suffisants pour porter un identifiant de flux et/ou de source sans nécessiter l'ajout de nouvelles étiquettes ou la modification des plans de transfert des routeurs d'un réseau MPLS.

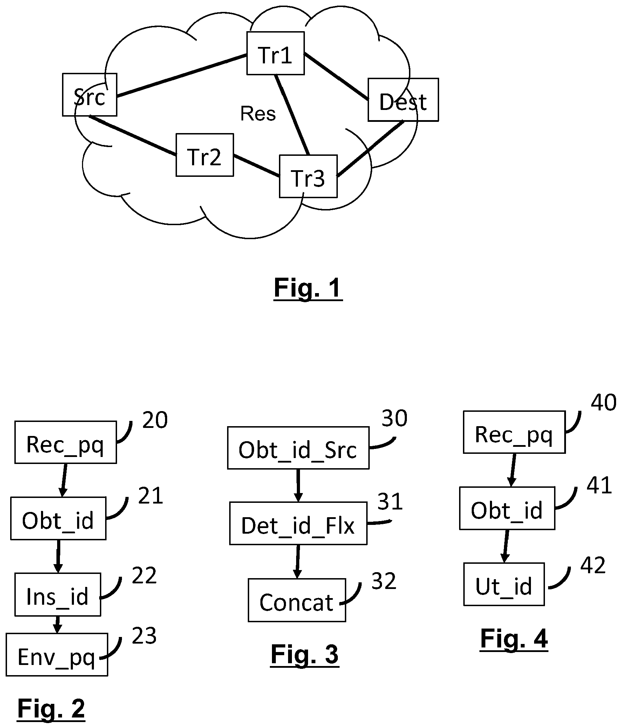

La figure 1 illustre de manière simplifiée un exemple d'un réseau ou d'une partie de réseau IP/MPLS Res comprenant un routeur d'entrée Src aussi connu sous le nom de routeur "ingress LSR "pour Ingress Label Switching Router en anglais, des routeurs de transit Tr1-Tr3, aussi connus sous le nom de transit LSR, et un routeur de sortie ou de destination Dest aussi connu sous le nom de routeur "egress LSR". Différents tunnels pour transmettre des paquets de données reçus par le routeur d'entrée Src sont définis dans ce réseau Res .

La figure 2 illustre des étapes du procédé d'envoi d'un groupe de paquets de données sur un réseau IP/MPLS, par exemple le réseau Res de la figure 1, selon un mode particulier de réalisation de l'invention.

Selon le mode particulier de réalisation de l'invention décrit ici, le procédé d'envoi est mis en œuvre par un dispositif de routage placé à l'entrée d'un réseau MPLS, par exemple le routeur Src de la figure 1. Dans d'autres variantes de réalisation, le procédé d'envoi peut être mis en œuvre par un routeur de transit du réseau IP/MPLS.

On décrit ci-après une variante de réalisation selon laquelle un identifiant de la source émettant des paquets de données dans le réseau MPLS est inséré. Un tel identifiant de source est représentatif d'un groupe de paquets au sens de l'invention. En effet, l'identifiant de source sera alors porté par tous les paquets émis par cette source.

Lors d'une étape 20, le routeur d'entrée Src reçoit un paquet de données Px d'un flux F à émettre. Classiquement, le routeur d'entrée Src encapsule le paquet Px selon le protocole MPLS en ajoutant au paquet Px des étiquettes MPLS obtenues à partir des tables de correspondance stockées en mémoire et définies par l'opérateur du réseau MPLS, ou échangées par les protocoles de routage et de signalisation, pour transmettre les paquets de données du flux F sur le chemin correspondant.

Lors d'une étape 21, le routeur d'entrée Src obtient son identifiant de source. Classiquement, le routeur Src est identifié avec un identifiant unique, en général un identifiant court.

Dans les réseaux connus sous le nom de Segment Routing en anglais, un tel identifiant de source peut correspondre à l'identifiant de segment du routeur d'entrée (SID pour Segment IDdentification en anglais). Un tel identifiant a la forme d'un index ou d'un label provisionné sur le routeur et rempli déjà exactement le rôle d'identifiant de source.

Lors d'une étape 22, dans le cas où le paquet de données PX comprend déjà des étiquettes d'entropie MPLS EL et ELI, le routeur Src peut choisir d'insérer son identifiant de source dans un champ ou une partie d'un champ des étiquettes d'entropie, tels que décrit plus haut. Alternativement, le routeur Src peut choisir d'ajouter un autre couple d'étiquette d'entropie tel que décrit ci-dessus.

Les champs ou partie de champs des étiquettes d'entropie utilisés pour porter un identifiant peuvent soit être définis par l'opérateur du réseau MPLS, soit être figés par le standard MLPS si l'organisme de normalisation a défini les champs des étiquettes d'entropie devant être utilisés pour porter l'identifiant, soit figés ou contraint par l'implémentation utilisée en fonction du type de routeur par exemple et des caractéristiques matérielles et logicielles des routeurs.

Lorsque l'utilisation des champs n'est pas figée, les champs à utiliser peuvent être choisis en fonction de la préférence de l'opérateur, du nombre de sources différentes, et donc du nombre de bits nécessaire pour encoder l'identifiant de source, de la capacité/des limitations des équipements de l'opérateur, de l'utilisation ou non du mécanisme PHP dans le réseau... Par exemple, l'identifiant de source est codé sur 8 bits et est inséré dans le champ "Label" de l'étiquette EL.

Dans le cas où le paquet de données PX ne comprend pas d'étiquettes d'entropie MPLS EL et ELI, lors de l'étape 22, le routeur Src insère une étiquette ELI et une étiquette EL, et au moins une partie d'un champ d'une de ces deux étiquettes comprend l'identifiant de source. Par exemple, comme précédemment, l'identifiant de source est codé sur 8 bits et est inséré dans le champ "Label" de l'étiquette EL.

Selon un autre exemple, par exemple lorsque le mécanisme PHP n'est pas utilisé dans le réseau IP/MPLS, l'identifiant de source codé sur 8 bits est inséré dans le champ "TTL" de l'étiquette ELI.

D'autres emplacements d'insertion de l'identifiant sont possibles et n'importe quelle partie des champs des étiquettes EL et ELI décrits plus haut peuvent être utilisés.

Lors d'une étape 23, le routeur Src émet le paquet Px ainsi modifié à travers le réseau MPLS vers sa destination.

On décrit ci-après une autre variante de réalisation selon laquelle un identifiant d'un flux est inséré dans les paquets de données. Un tel identifiant de flux est représentatif d'un groupe de paquets au sens de l'invention. En effet, l'identifiant de flux sera alors porté par tous les paquets de données appartenant au flux.

Dans cette variante, un identifiant de flux est alloué de manière centralisée, par exemple par un serveur central gérant tous les flux émis.

Lors de l'étape 21, l'identifiant de flux est alors distribué au routeur Src de manière classique, par exemple par configuration (par exemple selon les protocoles CLI, NETCONF/YANG) ou via les protocoles PCEP ou BGP (pour Border Gateway Protocol en anglais).

Lors de l'étape 22, si les paquets de données du flux comprennent déjà des étiquettes d'entropie MPLS EL et ELI, le routeur Src peut insérer l'identifiant de flux reçu à l'étape 21 dans les paquets de ce flux. Pour cela, le routeur Src insère l'identifiant de flux dans les champs des étiquettes d'entropie MPLS EL et ELI, choisis par l'opérateur ou définis par la norme, de préférence sans modifier la valeur du label d'entropie existante. Alternativement, le routeur Src peut ajouter un nouveau couple (ELI, EL) d'étiquettes d'entropie et y insérer l'identifiant.

Par exemple, l'identifiant de flux est codé sur 3 bits et est inséré dans le champ "TC" de l'étiquette EL. D'autres emplacements d'insertion de l'identifiant sont possibles et n'importe quelle partie des champs des étiquettes EL et ELI décrits plus haut peuvent être utilisés. Dans le cas où les paquets de données ne comprennent pas d'étiquettes d'entropie MPLS EL et ELI, lors de l'étape 22, le routeur Src insère une étiquette ELI et une étiquette EL, et l'identifiant de flux dans au moins une partie d'un champ d'une de ces deux étiquettes.

On décrit ci-après une autre variante de réalisation selon laquelle un identifiant de flux et un identifiant de source sont insérés dans les paquets de données. Selon cette variante, on suppose que le flux est identifié de manière décentralisée.

La figure 3 illustre des étapes pour l'obtention de l'identifiant à insérer dans les paquets de données du flux F.

Lors d'une étape 30, comme pour la première variante, le routeur Src obtient son identifiant de source. Il est identifié avec un identifiant unique, en général court, par exemple un identifiant codé sur 10 bits si le réseau MPLS auquel il appartient comprend moins de 1000 routeurs sources.

Lors d'une étape 31, le routeur Src détermine un identifiant de flux pour le flux F à transmettre. Le flux étant identifié de manière décentralisé, le routeur Src choisit librement, i.e. localement, un identifiant de flux, court si possible. Par exemple, le routeur Src sélectionne un identifiant codé sur 8 bits, si ce routeur source n'a besoin d'identifier que 256 flux au maximum.

Lors d'une étape 32, le routeur Src concatène son identifiant de source et l'identifiant de flux déterminé à l'étape 31 pour former un identifiant de source+flux sur 18 bits.

Puis, lors de l'étape 22, si les paquets de données du flux comprennent déjà des étiquettes d'entropie MPLS EL et ELI, le routeur Src peut insérer l'identifiant source+flux obtenu dans les champs adéquats des étiquettes d'entropie. Alternativement, le routeur Src peut choisir d'ajouter un nouveau couple (ELI, EL) d'étiquettes d'entropie, en plus des étiquettes d'entropie déjà présentes. Le routeur Src insère alors son identifiant de source+flux dans les champs du nouveau couple (ELI, EL) d'étiquettes d'entropie.

Par exemple, les 10 bits d'identifiants de source sont insérés dans le champ "Label" de l'étiquette EL et les 8 bits d'identifiants de flux sont insérés dans le champ "TTL" de l'étiquette EL.

Si les paquets de données du flux ne comprennent pas d'étiquettes d'entropie MPLS EL et ELI, lors de l'étape 22, le routeur Src insère une étiquette ELI et une étiquette EL dans chaque paquet de données du flux, et dans au moins une partie d'un champ d'une de ces deux étiquettes l'identifiant de source+flux.

On décrit ci-après une autre variante de réalisation selon laquelle un identifiant de groupe de paquets d'un flux est inséré dans les paquets de données. Cette variante de réalisation permet ainsi d'identifier des groupes de paquets de données distincts appartenant à un même flux de données. Selon cette variante, l'identifiant de flux est identifié de manière centralisé et l'identifiant des groupes de paquets est déterminé de manière locale par le routeur Src.

Lors de l'étape 21, l'identifiant de flux est obtenu par le routeur Src de manière classique, par exemple par configuration (par exemple selon les protocoles CLI, NECONF/YANG) ou via le protocole PCEP, par exemple un tel identifiant de flux est codé sur 10 bits. Lors de l'étape 21, le routeur Src détermine aussi un identifiant de groupe pour chaque groupe de paquets de données du flux. Par exemple, un tel identifiant de groupe est codé sur 8 bits. L'identifiant de groupe est identique pour tous les paquets de données appartenant à un même groupe de paquets de données. Et, l'identifiant de groupe est distinct d'un groupe à l'autre afin de distinguer les groupes de paquets.

Lors de l'étape 22, si les paquets de données du flux comprennent déjà des étiquettes d'entropie MPLS EL et ELI, le routeur Src insère alors l'identifiant de flux reçu à l'étape 21 dans le champ "Label" de l'étiquette d'entropie "EL", et l'identifiant de groupe dans un autre champs de l'étiquette d'entropie EL ou ELI.

Par exemple, l'identifiant de groupe est inséré dans le champ "TTL" de l'étiquette d'entropie EL.

Alternativement, le routeur Src peut choisir d'ajouter un nouveau couple (ELI, EL) d'étiquettes d'entropie, en plus des étiquettes d'entropie déjà présentes. Le routeur Src insère alors l'identifiant de flux et l'identifiant de groupe dans les champs du nouveau couple (ELI, EL) d'étiquettes d'entropie, comme indiqué ci-dessus.

Dans le cas où les paquets de données du flux ne comprennent pas d'étiquettes d'entropie MPLS EL et ELI, lors de l'étape 22, le routeur Src insère une étiquette ELI et une étiquette EL, et l'identifiant de flux étant inséré dans le champ "Label" de l'étiquette d'entropie "EL", et l'identifiant de groupe dans un autre champs de l'étiquette d'entropie EL ou ELI.

Selon cette variante de réalisation, des groupes de paquets d'un même flux peuvent être identifiés via des identifiants de groupe distincts tout en permettant d'acheminer tous les groupes de paquets via le même chemin, grâce à l'identifiant de flux compris dans le champ "Label" de l'étiquette d'entropie "EL" qui est identique pour tous les paquets du flux.

On décrit ci-après une autre variante de réalisation selon laquelle un identifiant de la tranche de réseau est inséré. Un tel identifiant de tranche de réseau est représentatif d'un groupe de paquets au sens de l'invention. En effet, l'identifiant de tranche de réseau sera alors porté par tous les paquets transportés dans cette tranche de réseau.

Lors d'une étape 20, le routeur d'entrée Src reçoit un paquet de données Px d'un flux F à émettre. Classiquement, le routeur d'entrée Src encapsule le paquet Px selon le protocole MPLS en ajoutant au paquet Px des étiquettes MPLS obtenues à partir des tables de correspondance stockées en mémoire et définies par l'opérateur du réseau MPLS, ou échangées par les protocoles de routage et de signalisation, pour transmettre les paquets de données du flux F sur le chemin correspondant.

Lors de l'étape 21, l'identifiant de tranche de réseau est distribué au routeur Src de manière classique, par exemple par configuration (par exemple selon les protocoles CLI, NETCONF/YANG) ou via les protocoles PCEP ou BGP (pour Border Gateway Protocol en anglais).

Lors d'une étape 22, dans le cas où le paquet de données PX comprend déjà des étiquettes d'entropie MPLS EL et ELI, le routeur Src peut choisir d'insérer l'identifiant de tranche de réseau dans un champ ou une partie d'un champ des étiquettes d'entropie, tels que décrit plus haut. Alternativement, le routeur Src peut choisir d'ajouter un autre couple d'étiquette d'entropie tel que décrit ci-dessus.

On décrit ci-après une autre variante de réalisation selon laquelle un identifiant de qualité de service, complémentaire de l'identifiant de qualité de service déjà présent dans l'entête servant à l'acheminement du paquet (i.e. le champ TC de l'étiquette de haut de pile du paquet), est inséré. Un tel identifiant de qualité de service est représentatif d'un groupe de paquets au sens de l'invention. En effet, l'identifiant de qualité de service sera alors porté par tous les paquets transportés avec cette qualité de service. Cet identifiant de qualité de service pourra être utilisé par le dispositif de lecture afin d'appliquer à ce paquet les paramètres de qualité de service associés à la qualité de service identifiée, et par exemple utiliser une file d'attente spécifique et/ou une politique de mise en file d'attente ("enqueuing management" en anglais) ou de sortie de file d'attente ("dequeuing management" en anglais) spécifique.

Lors d'une étape 20, le routeur d'entrée Src reçoit un paquet de données Px d'un flux F à émettre. Classiquement, le routeur d'entrée Src encapsule le paquet Px selon le protocole MPLS en ajoutant au paquet Px des étiquettes MPLS obtenues à partir des tables de correspondance stockées en mémoire et définies par l'opérateur du réseau MPLS, ou échangées par les protocoles de routage et de signalisation, pour transmettre les paquets de données du flux F sur le chemin correspondant.

Lors de l'étape 21, l'identifiant de qualité de service est distribué au routeur Src, par exemple par configuration (par exemple selon les protocoles CLI, NETCONF/YANG) ou via les protocoles PCEP ou BGP (pour Border Gateway Protocol en anglais).

Lors d'une étape 22, dans le cas où le paquet de données PX comprend déjà des étiquettes d'entropie MPLS EL et ELI, le routeur Src peut choisir d'insérer l'identifiant de qualité de service dans un champ ou une partie d'un champ des étiquettes d'entropie, tels que décrit plus haut. Alternativement, le routeur Src peut choisir d'ajouter un autre couple d'étiquette d'entropie tel que décrit ci-dessus.

La figure 4 illustre des étapes du procédé de lecture d'un identifiant représentatif d'un groupe de paquets de données transmis sur un réseau IP/MPLS, selon un mode particulier de réalisation de l'invention. Un tel procédé est par exemple mis en œuvre par un dispositif de routage placé en sortie d'un réseau IP/MPLS, par exemple le routeur Dest de la figure 1, ou bien par un routeur de transit placé dans le réseau IP/MPLS, par exemple un des routeurs Tr1, Tr2 ou Tr3 de la figure 1 ou encore par un serveur applicatif (non représenté).

Lors d'une étape 40, un paquet de données encapsulé selon le protocole IP/MPLS est classiquement reçu par le dispositif de routage. Lorsque le procédé est mis en œuvre par un serveur applicatif, lors de l'étape 40, le serveur reçoit par exemple seulement une partie du paquet de données comprenant notamment l'entête du paquet de données comprenant notamment les étiquettes MPLS.

Lors d'une étape 41, le dispositif de routage ou le serveur applicatif obtient un identifiant depuis au moins une partie d'un champ de données associé à une étiquette d'entropie présente dans le paquet de données reçu. Un tel identifiant a été inséré conformément à l'une quelconque des variantes du procédé d'envoi décrit en relation avec les figures 2 ou 3. L'identifiant est donc obtenu à partir des champs ou de la partie des champs des étiquettes d'entropie dans lesquels le routeur Src a insérer l'identifiant.

Selon la variante de réalisation utilisée, l'identifiant obtenu peut correspondre à un identifiant de la source ayant émis le paquet de données, ou à un identifiant de groupe auquel le paquet appartient, ou à un identifiant de flux auquel le paquet appartient, ou bien à un identifiant comprenant une partie représentative de la source et une partie représentative du flux ou bien un identifiant de tranche de réseau ou bien un identifiant complémentaire de qualité de service. Selon la variante de réalisation, un identifiant de flux et un identifiant de groupe de paquets peuvent être obtenus des champs des étiquettes d'entropie.

Lors d'une étape 42, le dispositif de routage ou le serveur applicatif ayant obtenu l'identifiant peut alors l'utiliser par exemple pour mesurer la qualité du réseau, le taux de pertes de paquets, le nombre de paquets, les délais entre les paquets...

Selon une autre variante de réalisation, l'identifiant représente une information complémentaire de la qualité de service à appliquer à ce paquet et donc contribue à la détermination des paramètres de qualité de service à appliquer au paquet. Cela peut être l'utilisation d'une file d'attente spécifique et/ou une politique de mise en file d'attente (enqueuing management) ou de sortie de file d'attente (dequeuing management) spécifique. Selon une autre variante de réalisation, l'identifiant représente l'identifiant de tranche de réseau à utiliser pour acheminer ce paquet et donc les traitements particulier à appliquer au paquet.

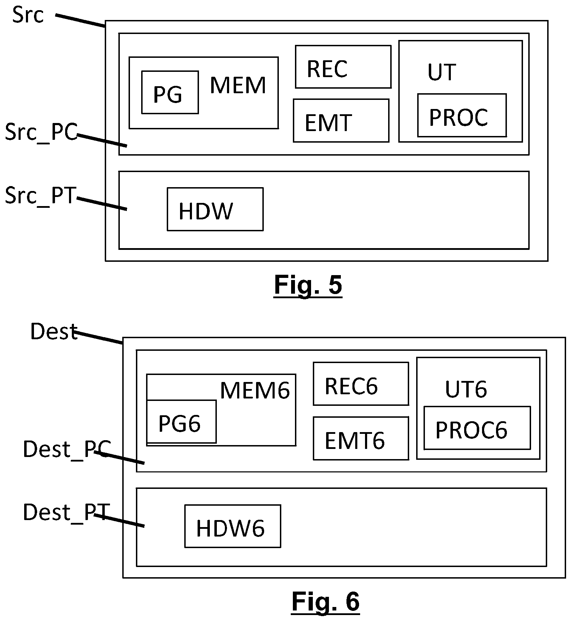

La figure 5 présente la structure simplifiée d'un dispositif Src adapté pour mettre en œuvre le procédé d'envoi d'un paquet de données MPLS selon l'un quelconque des modes particuliers de réalisation de l'invention décrits précédemment.

Selon un mode particulier de réalisation de l'invention, le dispositif Src comprend notamment un module de contrôle Src_PC configuré pour mettre en œuvre les fonctions de plan de contrôle et un module de transfert Src_PT configuré pour mettre en œuvre les fonctions de plan de transfert. Classiquement, le module de transfert Src_PT est constitué d'un processeur HDW configuré pour recevoir et émettre des paquets de données depuis et vers un réseau de données, sur instructions du module de contrôle Src_PC.

Le module de contrôle Src_PC a l'architecture classique d'un ordinateur et comprend notamment une mémoire MEM, une unité de traitement UT, équipée par exemple d'un processeur PROC, et piloté par le programme d'ordinateur PG stocké en mémoire MEM. Le programme d'ordinateur PG peut comprendre notamment des instructions pour mettre en œuvre les fonctions du plan de contrôle, comme les protocoles de routage, en fonction de tables de routage stockées dans la mémoire MEM, par exemple. Alternativement, les protocoles de routage peuvent être mis en œuvre par une ou plusieurs cartes d'interfaces (non représentées) du dispositif Src.

Selon un mode particulier de réalisation de l'invention, le dispositif Src est configuré pour encapsuler les paquets de données reçus selon le protocole MPLS.

Le dispositif Src comprend également un récepteur (REC) et un émetteur (EMT) adaptés pour recevoir et émettre des paquets de données.

Selon l'invention, le programme d'ordinateur PG stocké dans la mémoire du dispositif Src comprend également des instructions pour mettre œuvre les étapes du procédé d'envoi d'un groupe de paquets de données MPLS tel que décrit précédemment, lorsque le programme est exécuté par le processeur PROC.

A l'initialisation, les instructions de code du programme d'ordinateur PG sont par exemple chargées dans une mémoire avant d'être exécutées par le processeur PROC. Le processeur PROC de l'unité de traitement UT met notamment en œuvre les étapes du procédé d'envoi d'un paquet de données MPLS selon l'un quelconque de modes particuliers de réalisation décrits en relation avec la figure 2 ou 3, selon les instructions du programme d'ordinateur PG stocké dans la mémoire MEM.

Selon un mode particulier de réalisation de l'invention, le dispositif Src est compris dans un routeur d'entrée d'un réseau MPLS.

La figure 6 présente la structure simplifiée d'un dispositif Dest adapté pour mettre en œuvre le procédé de lecture d'un identifiant représentatif d'un groupe de paquets de données MPLS selon l'un quelconque des modes particuliers de réalisation de l'invention décrits précédemment.

Selon un mode particulier de réalisation de l'invention, le dispositif Dest comprend notamment un module de contrôle Dest_PC configuré pour mettre en œuvre les fonctions de plan de contrôle et un module de transfert Dest_PT configuré pour mettre en œuvre les fonctions de plan de transfert. Classiquement, le module de transfert Dest_PT est constitué d'un processeur HDW6 configuré pour recevoir et émettre des paquets de données depuis et vers un réseau de données, sur instructions du module de contrôle Dest_PC.

Le module de contrôle Dest_PC a l'architecture classique d'un ordinateur et comprend notamment une mémoire MEM6, une unité de traitement UT6, équipée par exemple d'un processeur PROC6, et pilotée par le programme d'ordinateur PG6 stocké en mémoire MEM6.

Selon un mode particulier de réalisation de l'invention, le dispositif Dest comprend également un récepteur (REC6) et éventuellement un émetteur (EMT6) adaptés pour respectivement recevoir et retransmettre
des paquets de données encapsulés selon le protocole MPLS.

Selon un autre mode particulier de réalisation de l'invention, le dispositif Dest est un serveur applicatif configuré pour recevoir et lire au moins une partie d'un paquet de données MPLS. Selon l'invention, le programme d'ordinateur PG6 stocké dans la mémoire du dispositif Dest comprend également des instructions pour mettre œuvre les étapes du procédé de lecture tel que décrit précédemment, lorsque le programme est exécuté par le processeur PROC6. A l'initialisation, les instructions de code du programme d'ordinateur PG6 sont par exemple chargées dans une mémoire avant d'être exécutées par le processeur PROC6. Le processeur PROC6 de l'unité de traitement UT6 met notamment en œuvre les étapes du procédé de réception d'un paquet de données MPLS selon l'un quelconque de modes particuliers de réalisation décrits en relation avec la figure 4, selon les instructions du programme d'ordinateur PG6 stocké dans la mémoire MEM6.

Le dispositif Dest est également configuré pour utiliser l'identifiant obtenu d'un paquet reçu en fonction d'une configuration déterminée par l'opérateur du réseau MPLS.

Selon un mode particulier de réalisation de l'invention, le dispositif Dest est compris dans un routeur de sortie d'un réseau MPLS.

Selon un autre mode particulier de réalisation de l'invention, le dispositif Dest est compris dans un routeur de transit d'un réseau MPLS.

## Revendications

1. Procédé d'envoi de paquets de données encapsulés selon le protocole MPLS, mis en œuvre par un dispositif d'envoi d'un réseau IP/MPLS, comprenant:
- l'obtention (21) d'un identifiant représentatif d'un groupe de paquets de données comprenant au moins un paquet de données,
- l'insertion (22) dudit identifiant dans au moins une partie d'un champ de données associé à une étiquette d'entropie du protocole MPLS dudit au moins un paquet de données, ledit champ de données étant compris dans la liste comprenant:
- un champ de données "Label" de l'étiquette d'entropie "Label EL",
- un champ de données "TC" de l'étiquette d'entropie "Label EL",
- un champ de données "TTL" de l'étiquette d'entropie "Label EL",
- un champ de données "TC" de l'étiquette d'entropie "Label ELI",
- un champ de données "TTL" de l'étiquette d'entropie "Label ELI",
- l'envoi (23) dudit au moins un paquet de données dans le réseau IP/MPLS.

2. Procédé d'envoi selon la revendication 1, dans lequel lorsqu'un flux comprend au moins deux groupes de paquets de données, une première partie dudit identifiant est insérée dans le champ de données "Label" de l'étiquette d'entropie "Label EL" de chacun des paquets de données des deux groupes, et une deuxième partie dudit identifiant est insérée dans un autre champ de l'étiquette d'entropie "Label EL" ou "Label ELI" de chacun des paquets de données des deux groupes, ladite deuxième partie étant identique pour tous les paquets d'un même groupe de paquets du flux, et distincte pour des paquets de données n'appartenant pas à un même groupe de paquets du flux.

3. Procédé d'envoi selon l'une quelconque des revendications 1 à 2, dans lequel ledit identifiant est un identifiant de flux auquel ledit groupe de paquets appartient et ledit identifiant est reçu par le dispositif de routage.

4. Procédé d'envoi selon l'une quelconque des revendications 1 à 2, dans lequel l'obtention d'un identifiant comprend:
- l'obtention (30) d'un identifiant dudit dispositif d'envoi,
- la détermination (31) par le dispositif d'envoi d'un identifiant de flux auquel appartient le groupe de paquets,
- la concaténation (32) dudit identifiant du dispositif d'envoi et dudit identifiant de flux pour former l'identifiant à insérer dans ledit au moins un paquet.

5. Dispositif d'envoi de paquets de données transmis sur un réseau IP/MPLS, comprenant un récepteur (REC), un émetteur (EMT), un processeur (PROC), et une mémoire (MEM) couplée au processeur avec des instructions destinées à être exécutées par le processeur pour:
- obtenir un identifiant représentatif d'un groupe de paquets de données comprenant au moins un paquet de données,
- insérer ledit identifiant dans au moins une partie d'un champ de données associé à une étiquette d'entropie du protocole MPLS dudit au moins un paquet de données, ledit champ de données étant compris dans la liste comprenant:
- un champ de données "Label" de l'étiquette d'entropie "Label EL",
- un champ de données "TC" de l'étiquette d'entropie "Label EL",
- un champ de données "TTL" de l'étiquette d'entropie "Label EL",
- un champ de données "TC" de l'étiquette d'entropie "Label ELI",
- un champ de données "TTL" de l'étiquette d'entropie "Label ELI",
- envoyer ledit au moins un paquet de données dans le réseau IP/MPLS.

6. Procédé de lecture d'un identifiant représentatif d'un groupe de paquets de données transmis sur un réseau IP/MPLS, comprenant:
- la réception (40) d'au moins une partie d'un paquet de données appartenant audit groupe de paquets de données,
- l'obtention (41) dudit identifiant depuis au moins une partie d'un champ de données associé à une étiquette d'entropie MPLS présente dans ledit paquet de données, ledit champ de données étant compris dans la liste comprenant:
- un champ de données "Label" de l'étiquette d'entropie "Label EL",
- un champ de données "TC" de l'étiquette d'entropie "Label EL",
- un champ de données "TTL" de l'étiquette d'entropie "Label EL",
- un champ de données "TC" de l'étiquette d'entropie "Label ELI",
- un champ de données "TTL" de l'étiquette d'entropie "Label ELI".

7. Dispositif de lecture d'un identifiant représentatif d'un groupe de paquets de données transmis sur un réseau IP/MPLS, comprenant un récepteur (REC6), un processeur (PROC6), et une mémoire (MEM6) couplée au processeur avec des instructions destinées à être exécutées par le processeur pour:
- recevoir au moins une partie d'un paquet de données appartenant audit groupe de paquets de données,
- obtenir ledit identifiant depuis au moins une partie d'un champ de données associé à une étiquette d'entropie MPLS présente dans ledit paquet de données, ledit champ de données étant compris dans la liste comprenant:
- un champ de données "Label" de l'étiquette d'entropie "Label EL",
- un champ de données "TC" de l'étiquette d'entropie "Label EL",
- un champ de données "TTL" de l'étiquette d'entropie "Label EL",
- un champ de données "TC" de l'étiquette d'entropie "Label ELI",
- un champ de données "TTL" de l'étiquette d'entropie "Label ELI".

8. Routeur de transit d'un réseau IP/MPLS comprenant un dispositif de lecture selon la revendication 7.

9. Routeur de sortie d'un réseau IP/MPLS comprenant un dispositif de lecture selon la revendication 7.

10. Routeur d'un réseau IP/MPLS comprenant un dispositif d'envoi selon la revendication 5.

11. Programme d'ordinateur comportant des instructions pour la mise en œuvre du procédé d'envoi selon l'une quelconque des revendications 1 à 4, ou pour la mise en œuvre du procédé de réception selon la revendication 6, lorsque les instructions sont exécutées par un processeur.

12. Support d'informations lisible par un ordinateur, et comportant des instructions pour la mise en œuvre du procédé d'envoi selon l'une quelconque des revendications 1 à 4, ou pour la mise en œuvre du procédé de réception selon la revendication 6, lorsque les instructions sont exécutées par un processeur.

## Patentansprüche

1. Verfahren zum Senden von gemäß dem MPLS-Protokoll verkapselten Datenpaketen, durchgeführt von einer Sendevorrichtung eines IP/MPLS-Netzwerks, das enthält:
- den Erhalt (21) einer für eine mindestens ein Datenpaket enthaltende Gruppe von Datenpaketen repräsentativen Kennung,
- die Einfügung (22) der Kennung in mindestens einen Teil eines Datenfelds, das einem Entropie-Label des MPLS-Protokolls des mindestens einen Datenpakets zugeordnet ist, wobei das Datenfeld in der Liste enthalten ist, die enthält:
- ein Datenfeld "Label" des Entropie-Labels "Label EL",
- ein Datenfeld "TC" des Entropie-Labels "Label EL",
- ein Datenfeld "TTL" des Entropie-Labels "Label EL",
- ein Datenfeld "TC" des Entropie-Labels "Label ELI",
- ein Datenfeld "TTL" des Entropie-Labels "Label ELI",
- das Senden (23) des mindestens einen Datenpakets in das IP/MPLS-Netzwerk.

2. Sendeverfahren nach Anspruch 1, wobei, wenn ein Strom mindestens zwei Gruppen von Datenpaketen enthält, ein erster Teil der Kennung in das Datenfeld "Label" des Entropie-Labels "Label EL" jedes der Datenpakete der zwei Gruppen eingefügt wird, und ein zweiter Teil der Kennung in ein anderes Feld des Entropie-Labels "Label EL" oder "Label ELI" jedes der Datenpakete der zwei Gruppen eingefügt wird, wobei der zweite Teil für alle Pakete einer gleichen Gruppe von Paketen des Stroms gleich ist, und für Datenpakete unterschiedlich ist, die nicht zu einer gleichen Gruppe von Paketen des Stroms gehören.

3. Sendeverfahren nach einem der Ansprüche 1 bis 2, wobei die Kennung eine Kennung eines Stroms ist, zu dem die Gruppe von Paketen gehört, und die Kennung von der Routingvorrichtung empfangen wird.

4. Sendeverfahren nach einem der Ansprüche 1 bis 2, wobei der Erhalt einer Kennung enthält:
- den Erhalt (30) einer Kennung der Sendevorrichtung,
- die Bestimmung (31) durch die Sendevorrichtung einer Stromkennung, zu dem die Gruppe von Paketen gehört,
- die Verkettung (32) der Kennung der Sendevorrichtung und der Stromkennung, um die Kennung zu bilden, die in das mindestens ein Paket einzufügen ist.

5. Vorrichtung zum Senden von Datenpaketen, die auf einem IP/MPLS-Netz übertragen werden, die einen Empfänger (REC), einen Sender (EMT), einen Prozessor (PROC) und einem mit dem Prozessor gekoppelten Speicher (MEM) mit Anweisungen enthält, die dazu bestimmt sind, vom Prozessor ausgeführt zu werden, um:
- eine Kennung zu erhalten, die für eine mindestens ein Datenpaket enthaltende Gruppe von Datenpaketen repräsentativ ist,
- die Kennung in mindestens einen Teil eines Datenfelds einzufügen, das einem Entropie-Label des MPLS-Protokolls des mindestens einen Datenpakets zugeordnet ist, wobei das Datenfeld in der Liste enthalten ist, die enthält:
- ein Datenfeld "Label" des Entropie-Labels "Label EL",
- ein Datenfeld "TC" des Entropie-Labels "Label EL",
- ein Datenfeld "TTL" des Entropie-Labels "Label EL",
- ein Datenfeld "TC" des Entropie-Labels "Label ELI",
- ein Datenfeld "TTL" des Entropie-Labels "Label ELI",
- Senden des mindestens einen Datenpakets in das IP/MPLS-Netz.

6. Verfahren zum Lesen einer Kennung, die für eine Gruppe von Datenpaketen repräsentativ ist, die auf einem IP/MPLS-Netz übertragen wird, das enthält:
- den Empfang (40) mindestens eines Teils eines Datenpakets, das zur Gruppe von Datenpaketen gehört,
- den Erhalt (41) der Kennung ausgehend von mindestens einem Teil eines Datenfeldes, das einem in dem Datenpaket vorhandenen Entropie-Label MPLS zugeordnet ist, wobei das Datenfeld in der Liste enthalten ist, die enthält:
- ein Datenfeld "Label" des Entropie-Labels "Label EL",
- ein Datenfeld "TC" des Entropie-Labels "Label EL",
- ein Datenfeld "TTL" des Entropie-Labels "Label EL",
- ein Datenfeld "TC" des Entropie-Labels "Label ELI",
- ein Datenfeld "TTL" des Entropie-Labels "Label ELI".

7. Lesevorrichtung einer Kennung, die für eine Gruppe von Datenpaketen repräsentativ ist, die auf einem IP/MPLS-Netz übertragen wird, die einen Empfänger (REC6), einen Prozessor (PROC6) und einen mit dem Prozessor gekoppelten Speicher (MEM6) mit Anweisungen enthält, die dazu bestimmt sind, von dem Prozessor ausgeführt zu werden, um:
- mindestens einen Teil eines Datenpakets zu empfangen, das zur Gruppe von Datenpaketen gehört,
- die Kennung ausgehend von mindestens einem Teil eines Datenfelds zu erhalten, das einem in dem Datenpaket vorhandenen Entropie-Label MPLS zugeordnet ist, wobei das Datenfeld in der Liste enthalten ist, die enthält:
- ein Datenfeld "Label" des Entropie-Labels "Label EL",
- ein Datenfeld "TC" des Entropie-Labels "Label EL",
- ein Datenfeld "TTL" des Entropie-Labels "Label EL",
- ein Datenfeld "TC" des Entropie-Labels "Label ELI",
- ein Datenfeld "TTL" des Entropie-Labels "Label ELI".

8. Transitrouter eines IP/MPLS-Netzes, der eine Lesevorrichtung nach Anspruch 7 enthält.

9. Ausgangsrouter eines IP/MPLS-Netzes, der eine Lesevorrichtung nach Anspruch 7 enthält.

10. Router eines IP/MPLS-Netzes, der eine Sendevorrichtung nach Anspruch 5 enthält.

11. Computerprogramm, das Anweisungen zur Durchführung des Sendeverfahrens nach einem der Ansprüche 1 bis 4 oder zur Durchführung des Empfangsverfahrens nach Anspruch 6 aufweist, wenn die Anweisungen von einem Prozessor ausgeführt werden.

12. Computerlesbarer Informationsträger, der Anweisungen zur Durchführung des Sendeverfahrens nach einem der Ansprüche 1 bis 4 oder zur Durchführung des Empfangsverfahrens nach Anspruch 6 aufweist, wenn die Anweisungen von einem Prozessor ausgeführt werden.

## Claims

1. Method for sending data packets encapsulated in accordance with the MPLS protocol, implemented by a sending device of an IP/MPLS network, comprising:
- obtaining (21) an identifier representative of a group of data packets comprising at least one data packet,
- inserting (22) said identifier into at least one part of a data field associated with an entropy label of the MPLS protocol of said at least one data packet, said data field being contained in the list comprising:
- a "Label" data field of the "EL label" entropy label;
- a "TC" data field of the "EL label" entropy label,
- a "TTL" data field of the "EL Label" entropy label,
- a "TC" data field of the "ELI Label" entropy label,
- a "TTL" data field of the "ELI Label" entropy label,
- sending (23) said at least one data packet in the IP/MPLS network.

2. Sending method according to Claim 1, wherein, when a flow comprises at least two groups of data packets, a first part of said identifier is inserted into the "Label" data field of the "EL label" entropy label of each of the data packets of the two groups, and a second part of said identifier is inserted into another field of the "EL label" or "ELI Label" entropy label of each of the data packets of the two groups, said second part being identical for all of the packets of one and the same group of packets of the flow, and distinct for data packets not belonging to one and the same group of packets of the flow.

3. Sending method according to either one of Claims 1 and 2, wherein said identifier is a flow identifier of the flow to which said group of packets belongs and said identifier is received by the routing device.

4. Sending method according to either one of Claims 1 and 2, wherein obtaining an identifier comprises:
- obtaining (30) an identifier of said sending device,
- determining (31), by way of the sending device, a flow identifier of the flow to which the group of packets belongs,
- concatenating (32) said identifier of the sending device and said flow identifier so as to form the identifier to be inserted into said at least one packet.

5. Device for sending data packets transmitted over an IP/MPLS network, comprising a receiver (REC), a transmitter (EMT), a processor (PROC) and a memory (MEM) coupled to the processor with instructions intended to be executed by the processor in order to:
- obtain an identifier representative of a group of data packets comprising at least one data packet,
- insert said identifier into at least one part of a data field associated with an entropy label of the MPLS protocol of said at least one data packet, said data field being contained in the list comprising:
- a "Label" data field of the "EL label" entropy label;
- a "TC" data field of the "EL label" entropy label,
- a "TTL" data field of the "EL Label" entropy label,
- a "TC" data field of the "ELI Label" entropy label,
- a "TTL" data field of the "ELI Label" entropy label,
- send said at least one data packet in the IP/MPLS network.

6. Method for reading an identifier representative of a group of data packets transmitted over an IP/MPLS network, comprising:
- receiving (40) at least one part of a data packet belonging to said group of data packets,
- obtaining (41) said identifier from at least one part of a data field associated with an MPLS entropy label present in said data packet, said data field being contained in the list comprising:
- a "Label" data field of the "EL label" entropy label;
- a "TC" data field of the "EL label" entropy label,
- a "TTL" data field of the "EL Label" entropy label,
- a "TC" data field of the "ELI Label" entropy label,
- a "TTL" data field of the "ELI Label" entropy label.

7. Device for reading an identifier representative of a group of data packets transmitted over an IP/MPLS network, comprising a receiver (REC6), a processor (PROC6) and a memory (MEM6) coupled to the processor with instructions intended to be executed by the processor in order to:
- receive at least one part of a data packet belonging to said group of data packets,
- obtain said identifier from at least one part of a data field associated with an MPLS entropy label present in said data packet, said data field being contained in the list comprising:
- a "Label" data field of the "EL label" entropy label;
- a "TC" data field of the "EL label" entropy label,
- a "TTL" data field of the "EL Label" entropy label,
- a "TC" data field of the "ELI Label" entropy label,
- a "TTL" data field of the "ELI Label" entropy label.

8. Transit router of an IP/MPLS network comprising a reading device according to Claim 7.

9. Output router of an IP/MPLS network comprising a reading device according to Claim 7.

10. Router of an IP/MPLS network comprising a sending device according to Claim 5.

11. Computer program comprising instructions for implementing the sending method according to any one of Claims 1 to 4 or for implementing the reception method according to Claim 6 when the instructions are executed by a processor.

12. Computer-readable information medium comprising instructions for implementing the sending method according to any one of Claims 1 to 4 or for implementing the reception method according to Claim 6 when the instructions are executed by a processor.
